# EUROPEAN PATENT SPECIFICATION

(11) **EP 0 936 424 B1**
(45) Date of publication and mention of the grant of the patent: **11.12.2002**
(21) Application number: 98120106.4
(22) Date of filing: 23.10.1998
(51) Int. Cl.: F25B 41/06, G05D 7/01, F25B 45/00, F16K 31/126

(54) **Expansion valve**
Entspannungsventil
Vanne de détente

(30) Priority: 10.02.1998 JP 2803998
(43) Date of publication of application: 18.08.1999
(73) Proprietor: Fujikoki Corporation, Tokyo (JP)
(72) Inventor: Yano, Masamichi, Setagaya-ku, Tokyo (JP)
(74) Representative: TER MEER STEINMEISTER & PARTNER GbR

(56) References cited:
- EP-A- 0 360 113
- EP-A- 0 664 425
- EP-A- 0 691 517
- EP-A- 0 836 061
- EP-A- 0 864 826
- EP-A- 0 871 000
- DE-U- 9 110 384
- JP-A- 2 154 955
- JP-A- 9 089 154
- US-A- 3 640 311
- US-A- 5 026 022

## Description

The present invention relates to an expansion valve according to the preamble of claim 1 as known, for example, from EP-A-0 691 517, having a diaphragm forming one portion of a sealing wall in a power element portion filled with a heat sensing refrigerant, and a valve driven in correspondence to the displacement of said diaphragm by a heat sensing drive shaft for changing the flow path area of an orifice through which a high-pressure refrigerant to be sent to an evaporator travels.

The EP 836 061 A1, which is a document falling under Article 54(3) EPC, discloses an expansion valve in which a resin having a low heat transmission rate is used to prevent the occurance of hunting phenomenaof the heat sensing shaft.

The EP 864 826 A, which is a document falling under Article 54(3) EPC, discloses a thermal expansion valve and describes a way of preventing bad sealing occurring from the torsion of a sealing member.

The EP 871 000 A1, which is a document falling under Article 54(3) EPC, discloses an expansion valve of reduced size and weight by making the diameter of the rod smaller but at the same time having resistance to buckling stress occurring to said rod member by determining the length/diameter ratio of the rod member.

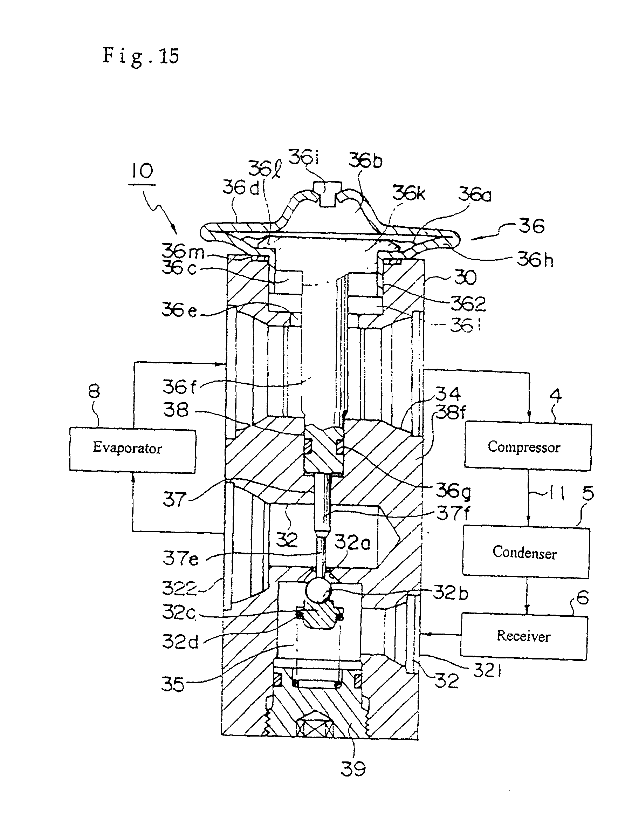

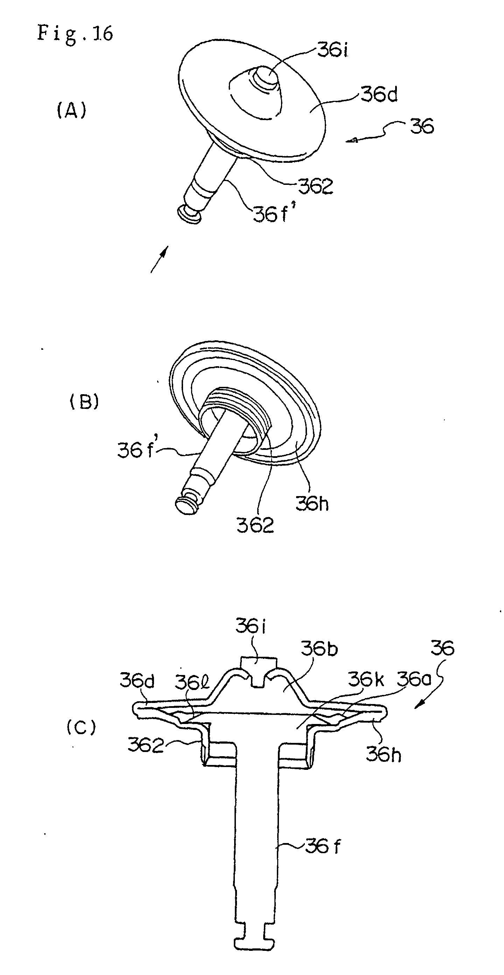

This type of expansion valve is used in a refrigeration cycle of an air conditioning device of a vehicle and the like, wherein FIG. 15 is a vertical cross-sectional view of one example of an expansion valve widely used conventionally shown together with an outline of the refrigeration cycle, and FIG. 16 shows the main portion thereof. The expansion valve 10 includes a roughly prismatic-shaped aluminum valve body 30 comprising a first passage 32 mounted in a refrigerant duct 11 of the refrigeration cycle from a refrigerant exit of a condenser 5 through a receiver 6 to a refrigerant entrance of an evaporator 8 through which a liquid-phase refrigerant travels, and a second passage 34 mounted in the refrigerant duct 11 from a refrigerant exit of the evaporator 8 to a refrigerant entrance of a compressor 4 through which a gas-phase refrigerant travels, said first passage 32 and said second passage 34 positioned above or below one another and separated by a separation wall 38f.

On the first passage 32 is formed an orifice 32a for performing an adiabatic expansion of the liquid refrigerant being supplied from the refrigerant exit of the receiver 6. A valve seat is formed on the entrance side of the orifice 32a or upper stream side of the first passage, and a valve 32b having a spherical shape supported by a valve member 32c from the upper stream side is positioned on said valve seat, wherein the valve 32b and the valve member 32c are fixed together by welding. The valve member 32c is positioned between the valve and a biasing means 32d of a compression spring and the like mounted on the lower portion of the valve body, and transmits the biasing force of the biasing means 32d to the valve 32b. The valve 32b is biased in the direction approaching the valve seat.

The first passage 32 to which the liquid refrigerant from the receiver 6 is introduced works as a passage for the liquid refrigerant, which comprises an entrance port 321 and a valve chamber 35 connected to the entrance port 321. The valve chamber 35 is a chamber with a bottom formed coaxial to the orifice 32a, which is sealed by a plug 39. The valve chamber 35 is communicated to the exit port 322 through the orifice 32a, and the exit port 322 is connected to the refrigerant entrance of the evaporator 8.

Further, the valve body 30 includes a small radius hole 37 and a large radius hole 38 having a larger radius than the hole 37 formed coaxial to the orifice 32a and penetrating the second passage 34, so as to provide a driving force to the valve 32b and to open or close the orifice 32a in correspondence to the exit temperature of the evaporator 8. On the upper end of the valve body 30 is formed a screw hole 361 where a power element portion 36 working as a heat sensing portion is fixed.

The power element portion 36 is a member driven in correspondence to pressure, comprising a diaphragm 36a which is a metallic thin plate made of stainless steel with flexibility, an upper cover 36d and a lower cover 36h made of stainless steel mounted so as to contact each other with the diaphragm 36a positioned therebetween and working as sealing walls each defining a pressure chamber, an upper pressure chamber 36b and a lower pressure chamber 36c, having said diaphragm as one wall surface and divided into the upper and lower chambers by the diaphragm, and a blind plug 36i made of stainless steel for filling a predetermined refrigerant for sensing temperature and working as a diaphragm driving medium into said upper pressure chamber 36b, wherein said lower pressure chamber 36c is communicated to the second passage 34 through a pressure equalization hole 36e formed concentric to the center line of the orifice 32a. A refrigerant steam from the evaporator 8 flows through the second passage 34, and the passage 34 works as a passage for the gas-phase refrigerant, the pressure of said gas-phase refrigerant being loaded to the lower pressure chamber 36c through the pressure equalization hole 36e. Further, a pipe-like mounting seat 362 is formed on the lower cover 36h, the mounting seat 362 being screwed onto the screw hole 361, thereby being fixed to the valve body 30.

The present body further includes a heat sensing shaft 36f made of aluminum, which contacts the diaphragm 36a inside the lower pressure chamber 36c and positioned so as to penetrate the second passage 34 and mounted slidably inside the large radius hole 38 in the separation hole 38f, thereby communicating the refrigerant exit temperature of the evaporator 8 to the lower pressure chamber 36c, and at the same time, provides drive force by being slided inside the large radius hole in correspondence to the displacement of the diaphragm 36a accompanied by the pressure difference between the upper pressure chamber 36b and the lower pressure chamber 36c. The body further includes an operation shaft 37f made of stainless steel positioned slidably inside the small radius hole 37 and having a smaller radius than the heat sensing shaft 36f for pressing the valve 32b against the bias force of the biasing means 32d in correspondence to the displacement of the heat sensing shaft 36f. The heat sensing shaft 36f is equipped with a sealing member for securing the sealing ability between the first passage 32 and the second passage 34, such as an o-ring 36g. An upper end portion 36k of the heat sensing shaft 36f contacts the lower surface of the diaphragm 36a as a receiving portion, and comprises a stopper portion 36L enlarged to the radial direction so as to gain a large contact area with the diaphragm. The displacement of the diaphragm 36a is transmitted to the valve 32b through the heat sensing shaft 36f, and the stopper portion 36L is supported by the lower cover 36h so that the upper end portion 36k of the heat sensing shaft 36f may be slid inside the lower pressure chamber 36c.

Moreover, the lower end of the heat sensing shaft 36f contacts the upper end of the operation shaft 37f at the bottom portion of the large radius hole 38 and the lower end of the operation shaft contacts the valve 32b. The heat sensing shaft 36f together with the operation shaft 37f form a heat sensing drive shaft, and this heat sensing drive shaft acts as a valve drive shaft for transmitting the displacement of the diaphragm 36a to the valve 32b, which comprises of an upper end portion and a heat conducting portion.

In the structure of the power element portion 36, the heat sensing shaft 36f and the operation shaft 37f, when the operation shaft 37f is inserted to the small radius hole 37 and the heat sensing shaft 36f is inserted to the large radius hole 38, the mounting seat 362 on the lower cover 36h is fixed by being connected to a screw hole 361, the seal between the lower cover 36h and the valve body 30 being secured by the o-ring 36m. The screw hole 361 together with the lower cover 36h and the diaphragm 36a form the lower pressure chamber 36c.

Accordingly, on the pressure equalization hole 36e, a valve drive shaft extended from the lower surface of the diaphragm 36a to the orifice 32a of the first passage 32 is concentrically positioned. Further, the portion 37e of the operation shaft 37f is formed smaller (narrower) than the inner radius of the orifice 32a so as to be inserted through the orifice 32a, and thereby, the refrigerant may pass through the orifice 32a.

FIG. 16(A) is a schematic view showing the structure of the power element portion 36 and the heat sensing shaft 36f in the expansion valve 10 explained above, and FIG. 16(B) is a view taken from the direction of the arrow of FIG. 16(A), showing the state where the lower cover 36h is rotated and removed from the screw hole 361, so that the power element portion 36 and the heat sensing shaft are separated. FIG. 16(C) is a vertical cross-sectional view showing the structure of the power element portion 36 and the heat sensing shaft 36f. In the above structure, a predetermined refrigerant for sensing temperature is filled inside the upper pressure chamber 36b of the pressure housing 36d as a diaphragm drive medium (for example, the same gas as the refrigerant gas used in the refrigeration cycle), and the temperature of the refrigerant coming out from the refrigerant exit of the evaporator 8 and flowing through the second passage 34 is transmitted to the diaphragm drive medium through the diaphragm 36a and the heat sensing shaft 36f exposed to the second passage 34 or the pressure equalization hole 36e communicated to the second passage 34.

The diaphragm drive medium inside the upper pressure chamber 36b changes into gas in correspondence to the temperature being transmitted thereto, thereby changing the pressure inside said chamber which is loaded to the upper surface of the diaphragm 36a. The diaphragm 36a is vertically displaced by the difference between the pressure of the diaphragm drive gas loaded to the upper surface thereof and the pressure loaded to the lower surface thereof.

The displacement of the center area of the diaphragm 36a in the vertical direction is transmitted to the valve 32b through the heat sensing drive shaft, and moves the valve 32b close to or away from the valve seat of the orifice 32a. As a result, the flow path area of the orifice 32a is changed, and the flow rate of the refrigerant is controlled.

In other words, the heat sensing shaft 36f positioned inside the second passage 34 connected to the exit side of the evaporator 8 transmits the temperature of the low-pressure gas-phase refrigerant sent out from the evaporator to the upper pressure chamber 36b, and corresponding to the temperature, the pressure inside the upper pressure chamber 36b is changed. When the exit temperature of the evaporator 8 is high or heat load of the evaporator is increased, the pressure inside the upper pressure chamber 36b is raised, and in response, the heat sensing shaft 36f or heat sensing drive shaft is driven to the lower direction so as to lower the valve 32b, thereby increasing the opening of the orifice 32a. Accordingly, the quantity of the refrigerant supplied to the evaporator 8 will be increased, thereby lowering the temperature of the evaporator 8. In contrast, if the temperature of the refrigerant sent out from the evaporator 8 is decreased or heat load of the evaporator is decreased, the valve 32b is driven to the opposite direction, and the opening of the orifice 32a is decreased. Accordingly, the quantity of the refrigerant supplied to the evaporator 8 will be decreased, thereby increasing the temperature of the evaporator 8.

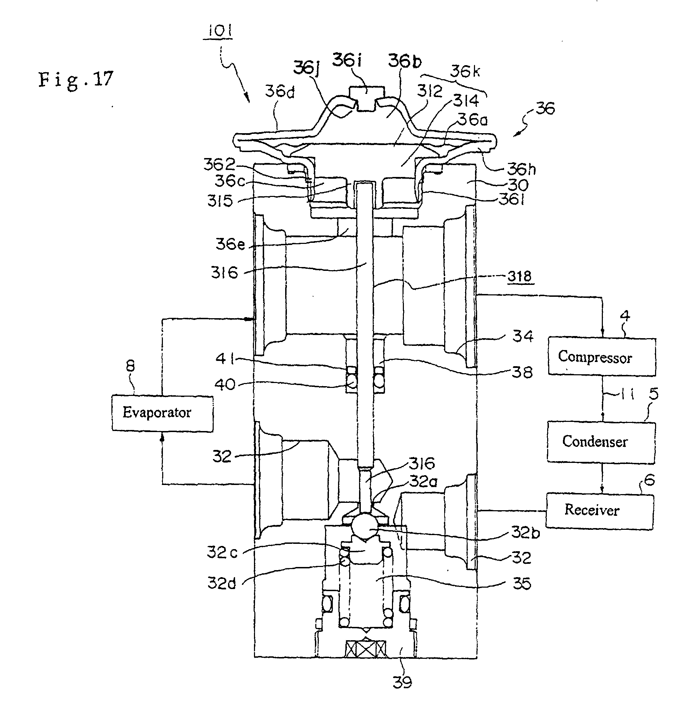

Similar to the expansion valve of the prior art shown in FIG. 15, FIG. 17 shows an expansion valve according to the prior art comprising a valve positioned to oppose to an orifice formed in the middle of a high-pressure refrigerant passage through which a high-pressure refrigerant sent into the evaporator travels, wherein the valve is driven to open or close in correspondence to the temperature of the low-pressure refrigerant sent out from the evaporator.

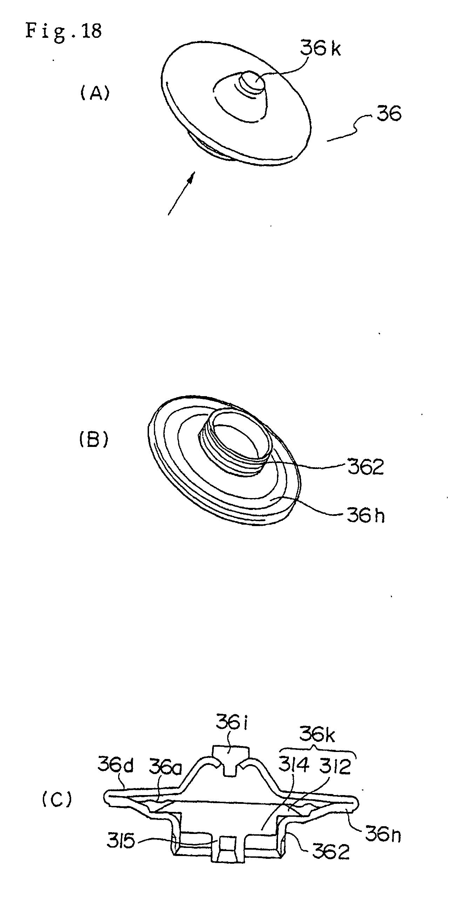

FIG. 17 is a vertical cross-sectional view showing the prior art expansion valve, and FIG. 18 is a drawing showing the main portion of FIG. 17. In FIG. 17, the same reference numbers as the prior art expansion valve of FIG. 15 show either the same or similar portions, but the structure of the heat sensing drive shaft differs from that shown in FIG. 15. In the expansion valve 101 shown in FIG. 17, the valve body 30 comprises a similar valve body as in the example shown in FIG. 15, and basically comprises an orifice 32a formed in a high-pressure refrigerant passage 32 through which a high-pressure refrigerant to be sent into the evaporator 8 travels, a spherical valve 32b positioned so as to oppose to said orifice 32a from the upper stream side of said refrigerant, a biasing means 32d for biasing said valve toward said orifice from the upper stream side, a valve member 32c positioned between said biasing means and said valve so as to transmit the biasing force of said biasing means to said valve 32b, a power element portion 36 driven in correspondence to the temperature of the low-pressure refrigerant sent out from said evaporator, and a heat sensing drive shaft or rod portion inserted through said orifice comprising a heat sensing shaft and an operation shaft formed integrally and positioned between said power element portion 36 and said valve 32b, wherein said valve could be driven close to or away from said orifice by said rod portion according to the movement of said power element portion, so that the flow rate of the refrigerant passing through the orifice may be controlled.

The heat sensing drive shaft 318 comprises a separately formed upper end portion 36k and an integrally formed heat sensing shaft and operation shaft as, for example, a stainless steel rod portion 316 having a small radius. The upper end portion 36k acts as a receiving portion contacted to the lower surface of the diaphragm 36a, comprising a stopper portion 312 enlarged to the radial direction and a large radius portion 314 whose other end portion forms a protrusion 315 on the center thereof and inserted slidably to the lower pressure chamber 36c. Further, the upper end of the rod portion 316 is connected to the interior of the protrusion 315 on the large radius portion 314, and the lower end thereof contacts the valve 32b.

The rod portion 316 forming the heat sensing shaft is driven vertically traversing the passage 34 in correspondence to the displacement of the diaphragm 36a in the power element portion 36, so a clearance communicating the passage 322 and the passage 34 may be formed along the rod portion 316. In order to prevent such communication, an o-ring 40 contacted to the outer peripheral of the rod portion 316 is positioned inside the large radius hole 38, so that the o-ring exists between the two passages. Moreover, as a detent for preventing the o-ring 40 from moving by the force operating in the longitudinal direction (the direction of the power element portion 36) by the refrigerant pressure of the passage 321 and the coil spring 32d, a washer or snap ring with teeth 41 is positioned inside the large radius hole 38 contacting the o-ring 40 so as to fix the o-ring. The rod portion 316 is formed for example by stainless steel, having a diameter of approximately 2.4 mm, and the portion of the rod portion 316 inserted in the orifice 32a is formed to have a diameter of approximately 1.6 mm.

In the prior art example shown in FIG. 17, the stopper portion 312 and the large radius portion 314 may be formed of brass, and the rod portion 316 may be formed of aluminum. Further, the stopper portion, the large radius portion and the rod portion may all be formed of stainless steel. In the prior art expansion valve shown in FIG. 18, the displacement of the diaphragm 36a is transmitted by the rod portion 316 to the spherical valve 32b, which moves the valve 32b close to or away from the orifice 32a so as to control the flow rate of the refrigerant, which is similar to the example shown in FIG. 15.

Further, similar to the expansion valve of FIG. 15, the valve shown in FIG. 17 is also filled with a predetermined refrigerant by use of a plug body 36i. The plug body 36i made for example of stainless steel is inserted so as to cover the hole 36j formed on the stainless steel upper cover 36d and fixed thereto by welding.

FIG. 18(A) shows a schematic view of the structure of the power element portion 36 of the expansion valve 101 explained above, and FIG. 18(B) is a view taken from the direction of the arrow of FIG. 18(A), wherein the lower cover 36h is rotated and removed from the screw hole 361, separating the power element portion 36. FIG. 18(C) is a cross-sectional view showing the structure of the power element portion 36.

### SUMMARY OF THE INVENTION

In the prior art expansion valve, a material such as aluminum, stainless steel or brass and the like are used as the metal material. In the recent years, the recycling of materials are strongly requested from the point of saving resources. In the prior art expansion valve, it was easy to recycle metal material when the expansion valve was formed by the same kind of metal. However, when various metal materials were used in the expansion valve, for example, stainless steel material for the diaphragm and aluminum material for the heat sensing drive shaft, it was difficult to recycle each metal material unless these various materials were segregated. Especially, in the prior art expansion valve, there was a problem that no consideration was made on recycling each metal material.

Moreover, there is a strong request from the point of view of the protection of earth environment that the refrigerant used in the refrigeration cycle should be collected without being discharged into the atmosphere. The prior art expansion valve had such refrigerant filled inside the pressure chamber of the power element portion as the diaphragm drive medium for displacing the diaphragm according to the change of pressure.

However, in the expansion valve of the prior art, there was a problem that no consideration was made on the collection of such refrigerant therefrom.

Therefore, the object of the present invention is to provide an expansion valve solving the problems of the prior art expansion valve by enabling recycling without having to change the structure drastically.

Moreover, the present invention aims at providing an expansion valve whose refrigerant could also be collected accompanying said recycling.

In order to solve the problem, the present invention provides the expansion valve as defined in claim 1. Further advantageous characteristics are specified in the depending claims.

### BRIEF DESCRIPTION OF THE DRAWINGS

FIG. 1 is vertical cross-sectional view showing the main portion of the expansion valve according to one embodiment of the present invention;
FIG. 2 is a vertical cross-sectional view and a schematic view showing the state where the power element of FIG. 1 is separated;
FIG. 3 is a vertical cross-sectional view equipped with the refrigerant collecting means on the main portion of the expansion valve according to the present invention;
FIG. 4 is a vertical cross-sectional view explaining the way to collect refrigerant according to the refrigerant collecting means of FIG. 3;
FIG. 5 is an explanatory view showing the method to collect the refrigerant from the refrigerant collecting means shown in FIG. 4 by use of a jig;
FIG. 6 is a vertical cross-sectional view showing the structure of the main portion of the expansion valve according to another embodiment of the present invention;
FIG. 7 is a cross-sectional view of the large radius portion of FIG. 6;
FIG. 8 is a vertical cross-sectional view showing the structure of the main portion of the expansion valve according to yet another embodiment of the present invention;
FIG. 9 is a vertical cross-sectional view and a schematic view showing the state where the power element portion of FIG. 8 is separated;
FIG. 10 is a vertical cross-sectional view explaining the way to collect the refrigerant by the refrigerant collecting means;
FIG. 11 is an explanatory view showing the method to collect refrigerant from the refrigerant collecting means shown in FIG. 10 by use of a jig;
FIG. 12 is a vertical cross-sectional view showing the main structure of the expansion valve according to yet another embodiment of the present invention;
FIG. 13 is a vertical cross-sectional view and a schematic view showing the state where the power element portion is separated in FIG. 12;
FIG. 14 is a vertical cross-sectional view explaining other shapes of the metal members shown in FIG. 8 or FIG. 12;
FIG. 15 is a vertical cross-sectional view showing the structure of the prior art expansion valve;
FIG. 16 is a schematic view and a vertical cross-sectional view showing the state where the power element portion of FIG. 15 is separated;
FIG. 17 is a cross-sectional view showing the structure of another prior art expansion valve; and
FIG. 18 is a schematic view and a vertical cross-sectional view showing the state where the power element portion of FIG. 17 is separated.

### PREFERRED EMBODIMENT OF THE INVENTION

The embodiment according to the present invention will now be explained with reference to the drawings.

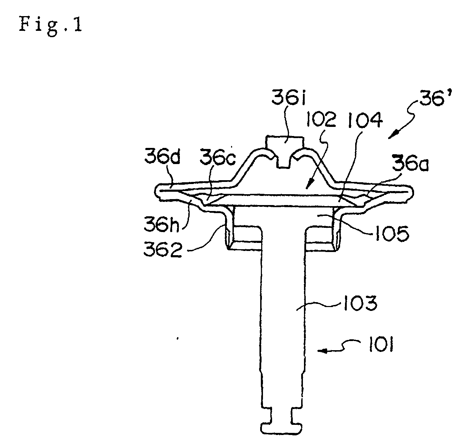

FIG. 1 is a vertical cross-sectional view showing the structure of the power element portion of the main portion of the expansion valve according to one embodiment of the present invention, and corresponds to the power element portion of the prior art expansion valve shown in FIG. 16(C).

The expansion valve of the present invention shown in FIG. 1 and that of the prior art shown in FIG. 15 and FIG. 16(C) have the same structure except for the heat sensing drive shaft of the power element portion. Therefore, in the present embodiment, the power element portion will only be shown while the other structures will be omitted. Similarly, in the other embodiments of the expansion valve according to the present invention disclosed hereinafter, only the structure of the power element portion will be shown in a vertical cross-sectional view, with other structures omitted.

In FIG. 1, a power element portion 36' comprises a heat sensing drive portion 101 which differs from the heat sensing drive shaft 36f in the prior art, but the other structures are the same as the power element portion 36 of the prior art shown in FIG. 15, the explanation of which are omitted by providing the same reference numbers. That is, the heat sensing drive shaft 101 comprises an upper end portion 102 and a heat conducting shaft 103, wherein the upper end portion 102 includes a stopper portion 104 and a large radius portion 105, each having one surface contacted to one surface of the other. The other surface of the stopper portion 104 being enlarged to the radial direction contacts the lower surface of a diaphragm 36a, and the other surface of the large radius portion 105 is equipped with the heat conducting shaft 103 being integrally formed to the large radius portion 105.

According to such structure, even if the power element portion 36' is composed of various metals, that is, if the blind plug 36i, the upper cover 36d, the lower cover 36h and the diaphragm 36a are formed of a stainless steel material and the large radius portion 105 and the heat conducting shaft 103 are formed of an aluminum metal, by utilizing a stainless steel material as the stopper portion 104, the various metals could be separated. That is, since the stopper portion 104 is enlarged to the radial direction and stopped by the lower cover 36h, the large radius portion 105 may be separated from the stopper portion 104, and the large radius portion 105 together with the heat conducting shaft 103 could be removed from the lower pressure chamber 36c of the power element portion 36' along the mounting seat 362.

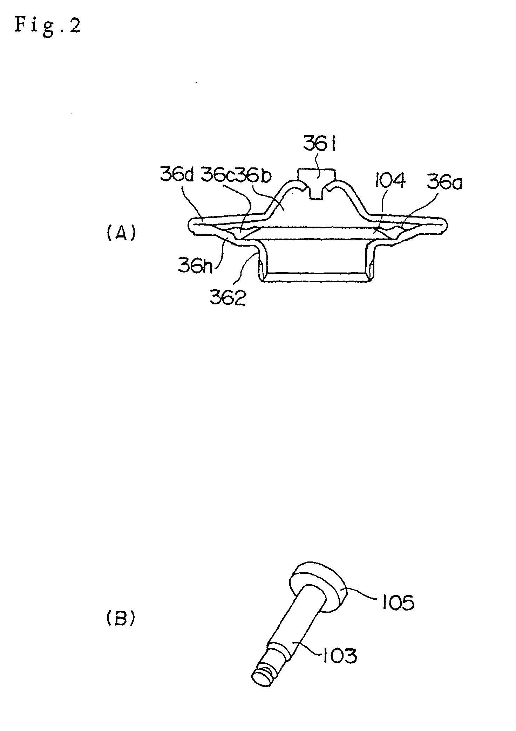

Therefore, according to the present embodiment, the metal portion made of stainless steel shown in FIG. 2(A) and the metal portion made of aluminum shown in FIG. 2(B) may be separated. Accordingly, these materials may be separated and recycled.

Advantageously, according to the present invention, by mounting a collecting means in advance for collecting the refrigerant to the metal portion made of stainless steel shown in FIG. 2(A) which is enabled to be recycled as explained above, the refrigerant could easily be collected.

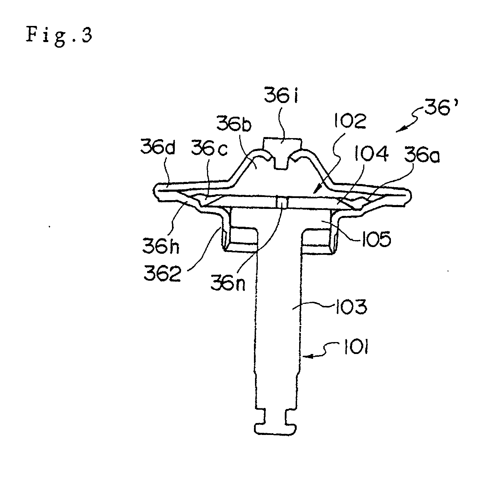

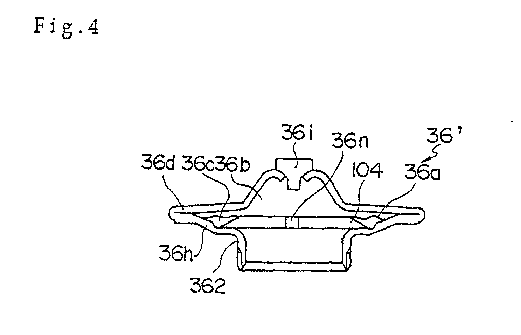

That is, in the state where the metal portion is separated as shown in FIG. 2(A), the predetermined refrigerant being filled inside the upper pressure chamber 36b may be collected. By providing a penetrating hole 36n with a diameter of approximately 3 mm as the collecting means to the center portion and the like of the stopper portion 104 as shown in FIG. 3, the refrigerant could be collected in the separated state as shown in FIG. 4.

Moreover, even if the penetrating hole 36n is formed on the stopper portion 104, the expansion valve may perform the same movement since the penetrating hole 36n contacts the lower surface of the diaphragm 36a and will be covered by the diaphragm 36a.

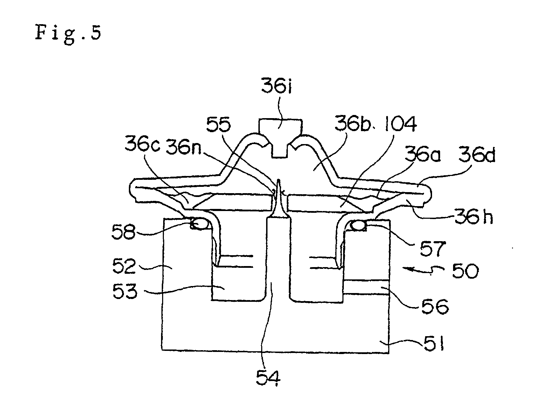

In the structure shown in FIG. 4, a jig or the like shown in FIG. 5 is used to collect the predetermined gas.

In FIG. 5, the metallic jig 50 is formed to have a cylindrical shape, comprising a disk-shaped bottom 51, an outer wall 52 formed on said bottom in the circumference area, an interior space 53 surrounded by the outer wall 52, and a convex portion 54 mounted inside the interior space 53 with a needle portion 55 mounted on the tip end thereof. On the outer wall 52 is formed a side hole 56 communicated to the interior space 53. On the upper end of the outer wall 52 of the jig 50 is formed a step portion 57, and the lower cover 36h shown in FIG. 4 is mounted on the upper end of the surrounding outer wall 52 through an o-ring 58 placed inside said step portion 57 as sealing means.

At this time, the needle portion 55 on the convex portion 54 is mounted inside the interior space 53 corresponding to the position of the penetrating hole 36n formed on the stopper 104. By pressing the power element 36, the needle portion 55 advances inside the penetrating hole 36n, breaking the diaphragm 36a formed of a metallic thin-film having flexibility (for example, a stainless steel plate having a plate thickness of approximately 0.1 mm) by the needle 55. As a result, the interior space 53 of the jig 50 and the upper pressure chamber 36b will be communicated through the penetrating hole 36n, and the refrigerant inside the upper pressure chamber 36b becomes confined inside the interior space 53 of the jig 50. This refrigerant will be sucked into a refrigerant collecting device not shown through the side hole 56 communicated to the interior space, and thereby, the refrigerant could be collected.

Further, either manual or automatic means may be used to press the power element 36h mounted to the jig 50.

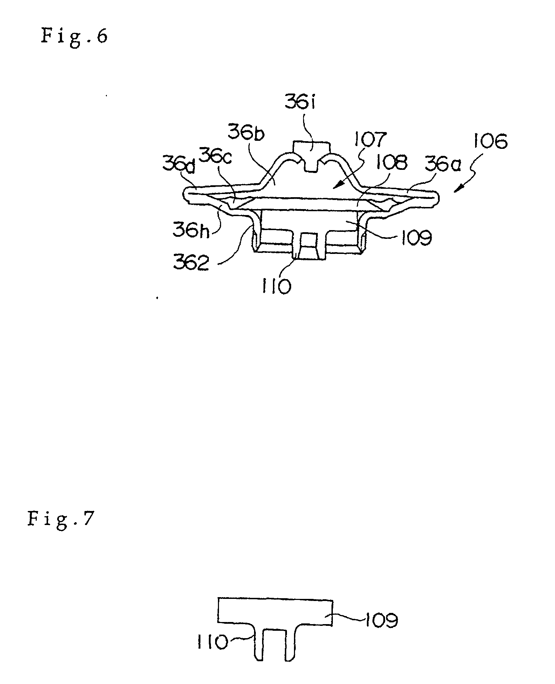

FIG. 6 is a vertical cross-sectional view of a power element portion 106 showing the main portion of the expansion valve according to another embodiment of the present invention, and corresponds to the power element portion 36 of the prior art expansion valve 10 shown in FIG. 16. Only the upper end portion 107 of the present expansion valve shown in FIG. 6 differs from the upper end portion 36k of the prior art expansion valve 10, so the explanation of the other members having the same reference numbers as that of the prior art expansion valve 10 are omitted.

In FIG. 6, the upper end portion 107 comprises a stopper portion 108 and a large radius portion 109 each having one surface contacting one surface of the other member, and the other surface of the stopper portion 108 being enlarged to the radial direction contacts the lower surface of the diaphragm 36a, and the other surface of the large radius portion 109 is equipped with a protrusion 110 which is integrally formed to the large radius portion 109, the interior of which is contacted to the upper end of the rod portion 316.

According to such structure, even if the power element portion 106 is formed of various metal materials, that is, if the blind plug 36i, the upper cover 36d, the lower cover 36h and the diaphragm 36a are formed of a stainless steel, and the large radius portion 109 is made of aluminum metal, the different metal materials could be separated by utilizing a stainless steel material as the stopper portion 108.

That is, since the stopper portion 106 is enlarged to the radial direction and held by the lower cover 36h, only the large radius portion 109 could be separated from the stopper portion 108 and removed from the lower pressure chamber 36c along the mounting seat 362. Therefore, according to the present embodiment, the large radius portion 109 made of aluminum may be separated as shown in FIG. 7. Accordingly, the different metal materials could each be separated and recycled.

Moreover, in the embodiment shown in FIG. 6, in order to collect the refrigerant being filled inside the upper pressure chamber 36b, a penetrating hole similar to that of the penetrating hole 36n shown in FIG. 3 may be formed to the stopper portion 108 of the embodiment shown in FIG. 6, and the refrigerant could be collected by utilizing the jig shown in FIG. 5.

The above explanation referred to the structure for separating the stopper portion and the large radius portion in the embodiment of the expansion valve according to the present invention. However, the present invention is not limited to such structure, but could utilize a separating means for separating the upper end portion of the heat sensing drive shaft from the diaphragm.

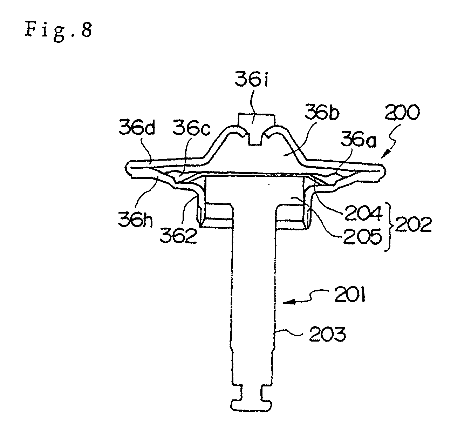

FIG. 8 is a vertical cross-sectional view of a power element portion 200 showing the main portion of yet another embodiment of the expansion valve according to the present invention, showing the example of utilizing a plate-like disk-shaped member made of metal material as said separating means. In the embodiment shown in FIG. 8, the structure except for the heat sensing drive shaft is the same as the power element portion 36 of the prior art expansion valve shown in FIG. 16(C).

That is, a heat sensing drive shaft 201 comprises an upper end portion 202 and a heat conducting shaft 203, wherein the upper end portion 202 comprises a plate-like member 204 and a large radius portion 205 each having one surface contacting one surface of the other member. The center portion on the other surface of the plate-like member 204 contacts the center portion of the lower surface of the diaphragm 36a, and the end portion of the plate-like member 204 is bent so as to be held by the lower pressure chamber 36c and positioned so as to contact the lower cover 36h.

In other words, the plate-like member 204 is positioned between the lower surface of the diaphragm 36a and the large radius portion 205, so as to contact the diaphragm 36a and the large radius portion 205. On the other surface of the large radius portion 205 is integrally equipped a heat conducting shaft 203.

According to such structure, even when the blind plug 36i, the upper cover 36d, the lower cover 36h and the diaphragm 36a are formed of a stainless steel material, and the large radius portion 205 is made of aluminum metal, the different metal materials could be separated by utilizing a stainless steel with a plate thickness of few millimeters, for example 2 mm, as the plate-like member 204.

That is, since the plate-like member 204 is held by the lower cover 36h, only the large radius portion 205 could be separated from the plate-like member 204, so the large radius portion 205 and the heat conducting shaft 203 may both be removed from the lower pressure chamber 36c of the power element 200 along the mounting seat 362.

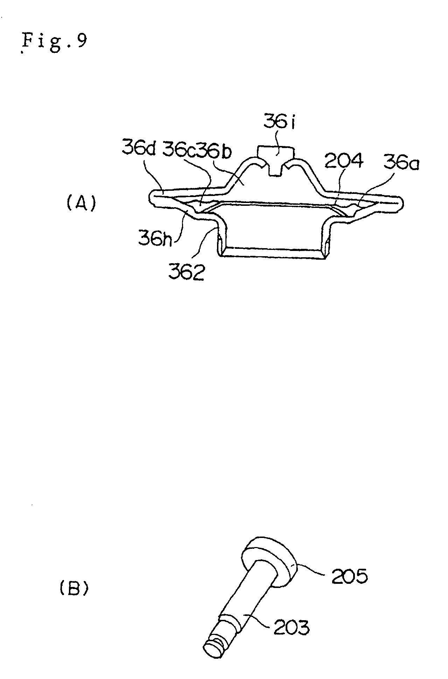

As explained, according to the present embodiment, the metal member made of stainless steel shown in FIG. 9(A) and the metal member made of aluminum shown in FIG. 9(B) could be separated. Therefore, these metals could each be segregated and recycled.

Moreover, according to the present invention, the refrigerant filled inside the upper pressure chamber 36b may also be collected in the separated state shown in FIG. 9(A).

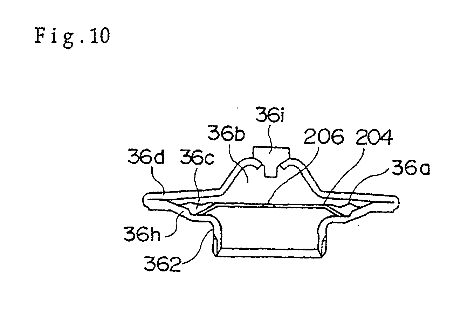

That is, in the center portion of the plate-like member 204 shown in the embodiment of FIG. 8, a penetrating hole having a diameter of approximately 3 mm or the like is formed in advance. When in the state where the members are separated as shown in FIG. 10, a penetrating hole 206 exists on the plate-like member 204.

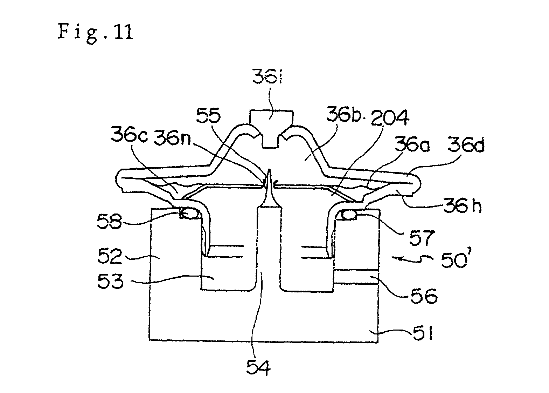

Accordingly, the refrigerant inside the chamber 36b may be collected by the same method as the collecting method shown in FIG. 5 and utilizing a jig 50' as shown in FIG. 11. Further, even when the penetrating hole 206 is formed on the plate-like member 204, the plate-like member 204 contacts the lower surface of the diaphragm 36a, so the penetrating hole 206 is covered by the diaphragm 36a and covered therewith. Therefore, the expansion valve could be operated just like the prior art expansion valve. The jig 50' of FIG. 11 is the same as the jig 50 shown in FIG. 5, so the same members are shown by the same reference numbers, and the explanations thereof are omitted.

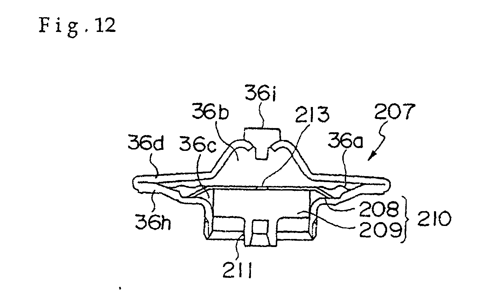

FIG. 12 is a vertical cross-sectional view of a power element portion 207 showing the main portion of the expansion valve according to yet another embodiment of the present invention, wherein the structure of the power element portion 207 only differs in the structure of an upper end portion 210 from the power element portion 36 of the prior art expansion valve shown as the main portion in FIG. 17(C), and the other structures are the same. Accordingly, the same members are provided with the same reference numbers as the prior art structure, and the explanations thereof are omitted.

In FIG. 12, the upper end portion 210 comprises a plate-like member 208 and a large radius portion 209 similar to the embodiment shown in FIG. 8, and the plate-like member 208 and the large radius portion 209 each have one surface contacting one surface of the other member, and the center portion of another surface of the plate-like member 208 contacts the center portion on the lower surface of the diaphragm 36a, and the rim portion of the plate-like member 208 is bent so as to be held by the lower pressure chamber 36c and positioned so as to contact the lower cover 36h. The other surface of the large radius portion 209 is equipped with an integrally formed protrusion 211.

The plate-like member 208 has one surface contacting the large radius portion 209 and the other surface contacting the lower surface of the diaphragm 36a, so accordingly, the plate-like member 208 is positioned between the diaphragm 36a and the large radius portion 209. According to such structure, even when the blind plug 36i, the upper cover 36d, the lower cover 36h and the diaphragm 36a are formed of a stainless steel material, and the large radius portion 209 is made of an aluminum or brass metal, the different metal materials could be separated by utilizing a stainless steel with a plate thickness of few millimeters, for example 2 mm, as the plate-like member 208.

Therefore, the plate-like member 208 is held at its end portion by the lower cover 36h, so only the large radius portion 205 may be separated from the plate-like member 208 and the large radius portion 209 may be removed from the lower pressure chamber 36c of the power element portion 207 along the mounting seat 362.

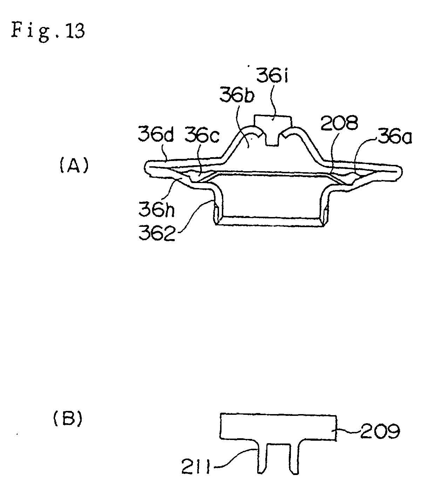

According to the present embodiment, the power element portion 207 could be separated into a metal portion made of stainless steel as shown in FIG. 13(A) and a metal portion made of aluminum or brass as shown in FIG. 13(B). Therefore, these materials could each be segregated and recycled.

Moreover, according to the embodiment shown in FIG. 12, 213 shows a penetrating hole formed on the plate-like member 213, and the penetrating hole 213 is formed to have a diameter of approximately 3 mm, which may be used for collecting the refrigerant filled inside the upper pressure chamber 36b of the power element portion 207. The collection of this refrigerant utilizes a jig as explained in FIG. 11, and is performed by the same method.

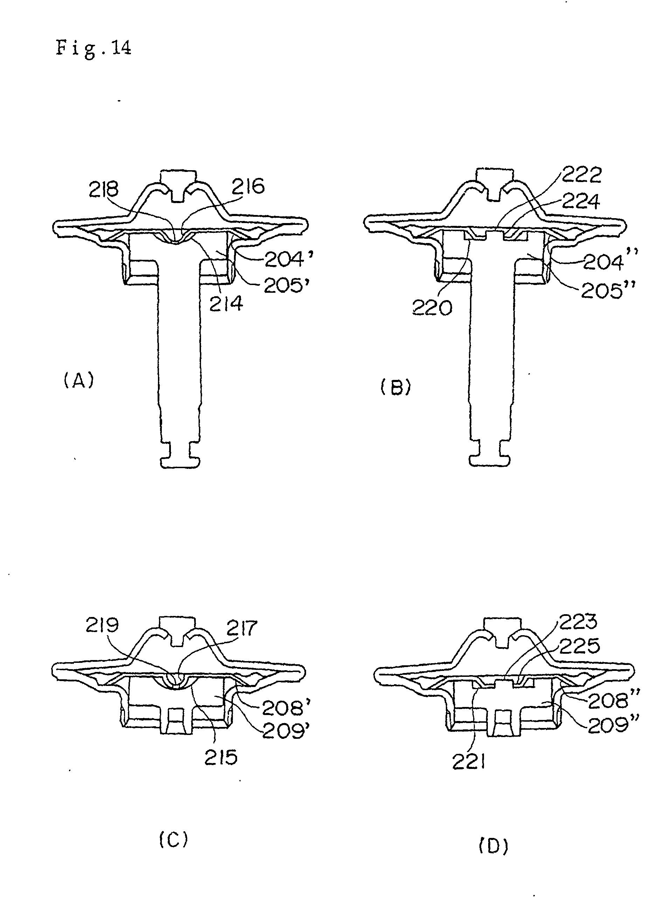

FIGS. 14(A), 14(B), 14(C) and 14(D) show the structure of the power element portion which is the main member of the expansion valves according to yet other embodiments of the present invention. The embodiment shown in FIG. 14 (A) and FIG. 14 (B) only differ from that of FIG. 8 in the structure of the plate-like member and the large radius member, and the other structures are the same. The same members are shown by the same reference numbers, and the explanations thereof are omitted. Further, in the embodiment shown in FIG. 14(C) and FIG. 14(D), only the plate-like member and the large radius member differs from the embodiment shown in FIG. 12, and the other structures are the same. The same members are shown by the same reference numbers, and the explanations thereof are omitted.

In the embodiments shown in FIG. 14(A) and FIG. 14(C), a concave portion 214 or 215 is formed on the center of the large radius portion 205' or 209' on the surface contacting the plate-like member 204' or 208'. On the center of the plate-like member 204' or 208' is formed a convex-shaped portion 216 or 217 which extends in the direction to contact the concave portion 214 or 215.

According to such embodiments, there is an advantage in that the plate-like member 204' and 208' may be contacted to the large radius portion 205' or 209' by adjusting the center to the convex-shaped portion.

Moreover, the peak portion of the convex-shaped portion 216 or 217 of the plate-like member 204' or 208' is formed a penetrating hole 218 or 219 similar to the penetrating holes mentioned before for collecting refrigerant. In the embodiments shown in FIG. 14(B) and FIG. 14(D), a convex portion 220 or 221 is formed on the large radius portion 205'' or 209'' on the surface contacting the plate-like member 204'' or 208'', and on the center area of the concave portion 220 or 221 is formed a convex portion 222 or 223. A disk-shaped small hole 224 or 225 formed on the center area of the plate-like member 204'' or 208'' is fit to the convex portion 222 or 223, and the plate-like member 204'' or 208'' is fixed thereto by staking.

According to such structure, there is an advantage in that the plate-like member 204'' or 208'' may strongly contact the large radius portion 205'' or 209''. According further to the embodiments shown in FIG. 14(B) and FIG. 14(D), the small hole 224 or 225 formed on the plate-like member 204'' or 208'' could be utilized as the penetrating hole for collecting refrigerant through which the needle portion 55 on the jig 50' shown in FIG. 5 penetrates, so there is an advantage in that there is no need to further mount a penetrating hole.

According to the embodiments shown in FIGS. 14 (A) through 14(D), the members formed of different metals may be separated from each other in the same method as the other embodiments mentioned before by use of the plate-like member 204', 204'', 208' or 208''.

As explained, the expansion valve according to the present invention is formed so that the different kinds of metal material could be separated easily, so the metal materials could be segregated and recycled.

Moreover, the expansion valve according to the present invention may realize such recycle by separating the large radius portion and the stopper portion contacting the diaphragm, so there is no need to change the structure of the prior art expansion valve greatly.

Moreover, by utilizing a separating means for separating the upper end portion of the heat sensing drive shaft contacting the diaphragm from the diaphragm, and by applying a metal corresponding to the various metals to be recycled as the separating means, the power element portion and the heat sensing drive shaft which are the main portions of the expansion valve may be formed by combining appropriate kinds of metal materials.

Even further, according to the expansion valve of the present invention, the recycle of the metal materials may also enable a simple collection of the refrigerant, so not only the saving of resources but also the collection of regulated refrigerant may be promoted.

## Claims

1. An expansion valve having a diaphragm (36a) forming one portion of a sealing wall in a power element portion (36) filled with a heat sensing refrigerant, and a valve (32b) driven in correspondence to the displacement of said diaphragm by a heat sensing drive shaft (101) for changing the flow path area of an orifice through which a high-pressure refrigerant to be sent to an evaporator (8) travels, the heat sensing drive shaft (101) comprising an upper end portion (102) and a heat conducting shaft (103), the upper end portion (102) of the heat sensing drive shaft (101) including a stopper portion (104) contacted to said diaphragm (36a):
**characterized in that** said heat conducting shaft (103) is formed of a metal different from that of said stopper portion (104) and said power element portion (36) thereby making the heat conducting shaft (103) formed so as to be separated from said power element portion (36) by leaving said stopper portion (104) inside said power element portion (36).

2. An expansion valve as claimed in claim 1 comprising a valve body (30) having a first passage (32) through which a high-pressure refrigerant travels and a second passage (34) through which a low-pressure refrigerant travels, a valve (32b) positioned inside said valve body for controlling the flow of the refrigerant travelling through said first passage, the power element portion (36) being mounted to the upper end portion of said valve body (30), a biasing means (35) positioned in the lower portion of said valve body (30) for biasing said valve, said power element portion (36) comprising an upper pressure chamber (36b) and a lower pressure chamber (36c) divided by the diaphragm (36a) mounted in the interior thereof;
**characterized in that** said heat conducting shaft (103) is formed to separate by leaving said stopper portion (104) inside said lower pressure chamber (36c).

3. An expansion valve as claimed in claim 1 or 2, **characterized in that** said upper end portion (102) of the sensing drive shaft (101) comprises the stopper portion (104) and a large radius portion (105), one surface of each of said least two portions (104, 101) being formed so as to contact one surface of the other of said least two portions (104, 105).

4. An expansion valve according to claim 1, 2 or 3, **characterized in that** said stopper portion (104) is equipped with a refrigerant collecting means (36n).

5. An expansion valve according to claim 4, **characterized in that** said collecting means is a penetrating hole (36n) which penetrates said stopper portion (104).

6. An expansion valve as claimed in claim 2, **characterized in that** said stopper portion is formed by a metal plate (204), the rim portion of which is held by the lower pressure chamber (36c) while the center portion contacts the diaphragm (36a).

7. An expansion valve as claimed in claim 6, **characterized in that** the center area of said metal plate (204',208') is staked and fixed to a concave portion (214,215) formed on the center area of the upper end portion (102) of said heat sensing drive shaft (101).

8. An expansion valve as claimed in claim 6, **characterized in that** the center area of said metal plate (204",208") is staked and fixed to convex portion (222,223) formed on the center area of the concave portion (220,221) which is formed on the upper end portion (102) of said heat sensing drive shaft (101).

9. An expansion valve as claimed in claim 6, **characterized in that** said metal plate (204') is equipped with a retrieving means for retrieving the refrigerant inside said power element portion.

10. An expansion valve as claimed in claim 7, **characterized in that** said metal plate (204',208') is equipped with a retrieving means (218,219) for retrieving the refrigerant in the power element portion.

11. An expansion valve of claim 8, **characterized in that** said metal plate (204",208") is equipped with a retrieving means (224,225) for retrieving the refrigerant in the power element portion.

## Patentansprüche

1. Entspannungsventil mit einer Membran (36a), die einen Teil einer dichten Wand in einem Antriebselementbereich (36) bildet, der mit einem temperatur-sensitiven Kältemittel gefüllt ist, und einem Ventil (32b), das entsprechend der Verschiebung der Membran durch eine temperatur-sensitive Antriebsachse (101) zur Änderung des Strömungsdurchlaßbereiches einer Drosselöffnung angetrieben wird, durch welche Drosselöffnung ein unter Hochdruck stehendes Kältemittel zu einem Verdampfer (8) geleitet wird, welche temperatur-sensitive Antriebsachse (101) einen oberen Endbereich (102) und einen wärmeleitenden Achsabschnitt (103) aufweist, welcher obere Endbereich (102) der temperatur-sensitiven Antriebsachse (101) einen Anschlagbereich (104) aufweist, der mit der Membran (36a) in Berührung steht, **dadurch gekennzeichnet, daß** der wärmeleitende Achsabschnitt (103) aus einem Metall besteht, das sich von demjenigen des Anschlagbereichs (104) unterscheidet, und daß der Antriebselementbereich (36) dadurch bewirkt, daß der wärmeleitende Achsabschnitt (103) so ausgebildet ist, daß er von dem Antriebselementbereich (36) dadurch getrennt ist, daß der Anschlagbereich (104) innerhalb des Antriebselementbereiches (36) liegt.

2. Entspannungsventil nach Anspruch 1, mit einem Ventilgehäuse (30), das einen ersten Kanal (32) aufweist, durch den ein unter Hochdruck stehendes Kältemittel strömt, sowie einen zweiten Kanal (34), durch den ein Niederdruck-Kältemittel strömt, einem Ventil (32b), das innerhalb des Ventilgehäuses zur Steuerung des Kältemittelstroms durch den ersten Kanal angeordnet ist, wobei der Antriebselementbereich (36) am oberen Ende des Ventilgehäuses (30) angebracht ist, einer Vorspanneinrichtung (35), die im unteren Bereich des Ventilgehäuses (30) zum Vorspannen des Ventils angeordnet ist, wobei der Antriebselementbereich (36) eine obere Druckkammer (36b) und eine untere Druckkammer (36c) umfaßt, die durch die Membran (36a) in deren Innerem unterteilt sind, **dadurch gekennzeichnet, daß** der wärmeleitende Achsenabschnitt (103) trennbar ist durch Belassen des Anschlagbereichs (104) innerhalb der unteren Druckkammer (36c).

3. Entspannungsventil nach Anspruch 1 oder 2, **dadurch gekennzeichnet, daß** der obere Endbereich (102) der temperatur-sensitiven Achse (101) den Anschlagbereich (104) und einen Bereich (105) mit großem Radius umfaßt, und daß eine Oberfläche der beiden letzteren Bereiche (104, 101) so ausgebildet ist, daß sie eine Oberfläche der anderen beiden letzteren Bereiche (104, 105) berührt.

4. Entspannungsventil nach einem Ansprüche 1, 2 oder 3, **dadurch gekennzeichnet, daß** der Anschlagbereich (104) mit einer Einrichtung (36n) zum Sammeln von Kältemittel versehen ist.

5. Entspannungsventil nach Anspruch 4, **dadurch gekennzeichnet, daß** die Einrichtung zum Sammeln von Kältemittel eine Durchgangsbohrung (36n) ist, die den Anschlagbereich (104) durchdringt.

6. Entspannungsventil nach Anspruch 2, **dadurch gekennzeichnet, daß** der Anschlagbereich durch eine Metallplatte (204) gebildet wird, deren Randbereich durch die untere Druckkammer (36c) gehalten wird, während der Mittelbereich die Membran (36a) berührt.

7. Entspannungsventil nach Anspruch 6, **dadurch gekennzeichnet, daß** der Mittelbereich der Metallplatte (204', 208') an einem konkaven Bereich (214, 215) im Mittelbereich des oberen Endbereichs (102) der temperatur-sensitiven Antriebsachse (101) befestigt ist.

8. Entspannungsventil nach Anspruch 6, **dadurch gekennzeichnet, daß** der Mittelbereich der Metallplatte (204",208") an einem kovexen Bereich (222, 223) befestigt ist, der im Mittelbereich des konkaven Bereichs (220, 221) ausgebildet ist, der sich am oberen Endbereich (102) der temperatur-sensitiven Antriebsachse (101) befindet.

9. Entspannungsventil nach Anspruch 6, **dadurch gekennzeichnet, daß** die Metallplatte (204') ausgerüstet ist mit einer Einrichtung zur Rückgewinnung des Kältemittels innerhalb des Antriebselementbereiches.

10. Entspannungsventil nach Anspruch 7, **dadurch gekennzeichnet, daß** die Metallplatte (204', 208') ausgerüstet ist mit einer Einrichtung (218, 219) zur Rückgewinnung des Kältemittels in dem Antriebselementbereich.

11. Entspannungsventil nach Anspruch 8, **dadurch gekennzeichnet, daß** die Metallplatte (204", 208") ausgerüstet ist mit einer Einrichtung (224, 225) zur Rückgewinnung des Kältemittels in dem Antriebselementbereich.

## Revendications

1. Soupape de détente ayant une membrane (36a) formant une partie d'une paroi d'étanchéité dans un élément d'actionnement (36) rempli d'un réfrigérant thermosensible, et un clapet (32b) entraîné conformément au déplacement de ladite membrane par une tige d'entraînement thermosensible (101) pour modifier la section de passage d'un orifice par lequel passe un réfrigérant sous haute pression à envoyer à un évaporateur (8), la tige d'entraînement thermosensible (101) comprenant une extrémité supérieure (102) et une tige (103) conductrice de la chaleur, l'extrémité supérieure de la tige d'entraînement thermosensible (101) comportant une partie formant butée (104) placée au contact de ladite membrane,
**caractérisée en ce que** ladite tige (103) conductrice de la chaleur est en métal différent de celui de ladite partie formant butée (104) et dudit élément d'actionnement (36), ce qui amène la tige (103) conductrice de la chaleur à se séparer dudit élément d'actionnement (36) en s'éloignant de ladite partie formant butée (104) à l'intérieur dudit élément d'actionnement (36).

2. Soupape de détente selon la revendication 1, comprenant un corps (30) de soupape ayant un premier passage (32) par lequel passe un réfrigérant sous haute pression et un second passage (34) par lequel passe un réfrigérant sous basse pression, un clapet (32b) placé à l'intérieur dudit corps de soupape pour réguler le débit du réfrigérant passant dans ledit premier passage, l'élément d'actionnement (36) étant monté à l'extrémité supérieure dudit corps (30) de soupape, un moyen de sollicitation (35) placé dans la partie inférieure dudit corps (30) de soupape pour solliciter ledit clapet, ledit élément d'actionnement (36) comportant une chambre supérieure (36b) de pression et une chambre inférieure (36c) de pression divisées par la membrane (36a) montée à l'intérieur de celui-ci ;
**caractérisée en ce que** ladite tige (103) conductrice de la chaleur est formée pour se séparer en s'éloignant de ladite partie formant butée (104) à l'intérieur de ladite chambre inférieure (36c) de pression.

3. Soupape de détente selon la revendication 1 ou 2, **caractérisée en ce que** ladite extrémité supérieure (102) de ladite tige d'entraînement thermosensible (101) comporte la partie formant butée (104) et une partie (105) à grand rayon, une surface de chacune des deux dernières parties citées (104, 105) étant formée de façon à venir au contact d'une surface de l'autre des deux dernières parties citées (104, 105).

4. Soupape de détente selon la revendication 1, 2 ou 3, **caractérisée en ce que** ladite partie formant butée (104) est munie d'un collecteur (36n) de réfrigérant.

5. Soupape de détente selon la revendication 4, **caractérisée en ce que** ledit collecteur est un trou pénétrant (36n) qui pénètre dans ladite partie formant butée (104).

6. Soupape de détente selon la revendication 2, **caractérisée en ce que** ladite partie formant butée est constituée par une plaque métallique (204) dont la partie marginale est retenue par la chambre inférieure (36c) de pression tandis que la partie centrale est au contact de la membrane (36a).

7. Soupape de détente selon la revendication 6, **caractérisée en ce que** la zone centrale de ladite plaque métallique (204',208') est matée et fixée à une partie concave (214, 215) formée sur la zone centrale de l'extrémité supérieure (102) de ladite tige d'entraînement thermosensible (101).

8. Soupape de détente selon la revendication 6, **caractérisée en ce que** la zone centrale de ladite plaque métallique (204",208") est matée et fixée à une partie convexe (222,223) formée sur la zone centrale de la partie concave (220,221) qui est formée à l'extrémité supérieure (102) de ladite tige d'entraînement thermosensible (101).

9. Soupape de détente selon la revendication 6, **caractérisée en ce que** ladite plaque métallique (204') est munie d'un moyen de récupération pour récupérer le réfrigérant à l'intérieur dudit élément d'actionnement.

10. Soupape de détente selon la revendication 7, **caractérisée en ce que** ladite plaque métallique (204',208') est munie d'un moyen de récupération (218,219) pour récupérer le réfrigérant dans l'élément d'actionnement.

11. Soupape de détente selon la revendication 8, **caractérisée en ce que** ladite plaque métallique (204",208") est munie d'un moyen de récupération (224,225) pour récupérer le réfrigérant dans l'élément d'actionnement.
